# EUROPEAN PATENT SPECIFICATION

(11) **EP 1 569 769 B1**
(45) Date of publication and mention of the grant of the patent: **01.02.2012**
(21) Application number: 03774419.0
(22) Date of filing: 12.11.2003
(51) Int. Cl.: B23B 27/16, B23C 5/22

(54) **CUTTING INSERT WITH AN ASTRAL RECESS FOR RECIEVING THE CLAMP**
SCHNEIDEINSATZ MIT STERNFÖRMIGER AUSSPARUNG ZUR AUFNAHME DER KLEMME
PIECE INSERABLE DE DECOUPE A CAVITE EN ETOILE POUR LA RECEPTION D'UNE BRIDE DE SERRAGE

(30) Priority: 13.11.2002 SE 0203378
(43) Date of publication of application: 07.09.2005
(73) Proprietor: Sandvik Intellectual Property AB, 811 81 Sandviken (SE)
(72) Inventor: SJÖÖ, Sture, S-806 41 Gävle (SE); SJÖBERG, Tomas, S-811 37 Sandviken (SE)
(74) Representative: Lieke, Winfried
(86) International application number: PCT/SE2003/001749
(87) International publication number: WO 2004/058437

(56) References cited:
- DE-A1- 19 703 848
- US-A- 4 480 950
- US-A- 5 033 916
- US-A- 5 658 100
- US-B1- 6 379 087
- US-B1- 6 641 337

## Description

The present invention relates to a new type of centrally hole-provided indexable insert " plates, intended for chip removing machining of metallic materials.

Such indexable insert plates normally have cutting tip angles below 80° and are usually intended for different types of copying. On the market, there is now a plurality of different types of insert holders, which are especially adapted for such indexable insert plates, such as rhombic, rhomboid or isoscelesly triangular indexable inserts. The material used in such indexable insert plates is normally sintered cemented carbide or ceramics.

A nowadays frequently used type of indexable insert plates is provided with a so-called wiper geometry outside in each active cutting corner. The meaning of this is a radius-modified corner geometry, with the corner radius in the cutting corner being composed of a plurality of small radii adjacent each other, with each radius portion next adjoining another radius portion having another radius size. By this type of geometries, it has become possible to increase the feeding of the cutting insert significantly at the same time as a desired good surface finish can be attained of the machined workpiece. Upon the use of such cutting inserts having a wiper geometry, the cutting insert is not clamped by usual lever holders, the meaning of which is holders of, e.g., the type that is shown and disclosed in the US patent 3,314,126. Upon use of this type of cutting inserts, it is now desirable to have a holder system, which means that upon clamping of the cutting insert, not only an inward-drawing force is provided but simultaneously also a downward-pressing force. This represents in itself a certain limitation as for the choice of geometries on top of the upper chip side of the cutting insert.

Against this background, it is an object of the present invention to provide a new insert design, which on one hand, is adapted for an efficient locking by means of the above-mentioned type of insert holders having inward-directed as well as downward-directed tensile forces and which on the other hand leaves sufficiently large margin on the top side of the cutting insert in order to, e.g., enable desired corner marking or another geometric marking or which enables insertion of more advanced chip breaker geometries directly pressed into the upper chip surface.

According to the invention, the surface of the cutting insert located around the hole has been made planar and has simultaneously been given a star-shaped contour having at least 6 points, the insert-clamping lower part surfaces of the clamp being arranged pairwisely to, upon tightening of the clamp, which clamps the cutting insert, being brought to planar surface abutment against pairwise-arranged point portions of the above-mentioned star-shaped part of the top side of the cutting insert. In this connection, the surface of the cutting insert located around the centre hole is preferably formed plane-parallelly to the bottom surface of the cutting insert. According to a feasible design form, the star-shapedly arranged part surface around the centre hole is formed as a countersink in the upper flat surface of the cutting insert. Alternatively, however, said star-shaped surface may be in the shape of a part surface elevated around the centre hole in relation to the rest of the top surface of the cutting insert.

The invention will in the following be described closer in connection with a preferred embodiment of the invention shown in the drawings.
Fig. 1 shows a side view of an insert holder and an indexable insert plate according to the invention.
Fig. 2 shows a planar view of an insert holder in co-operation with an indexable insert plate according to fig. 1.
Fig. 3 shows a view seen from below of a clamp to the insert holder in figs. 1-2.
Fig. 4 shows a planar view of an indexable insert according to figs. 1-2, and
Figs. 5 a-c shows a clamp and an indexable insert according to the invention in different locking positions.
Fig. 6 shows a perspective view of an alternative insert shape according to the invention.
Fig. 7 shows a perspective view of an additional insert shape according to the invention.

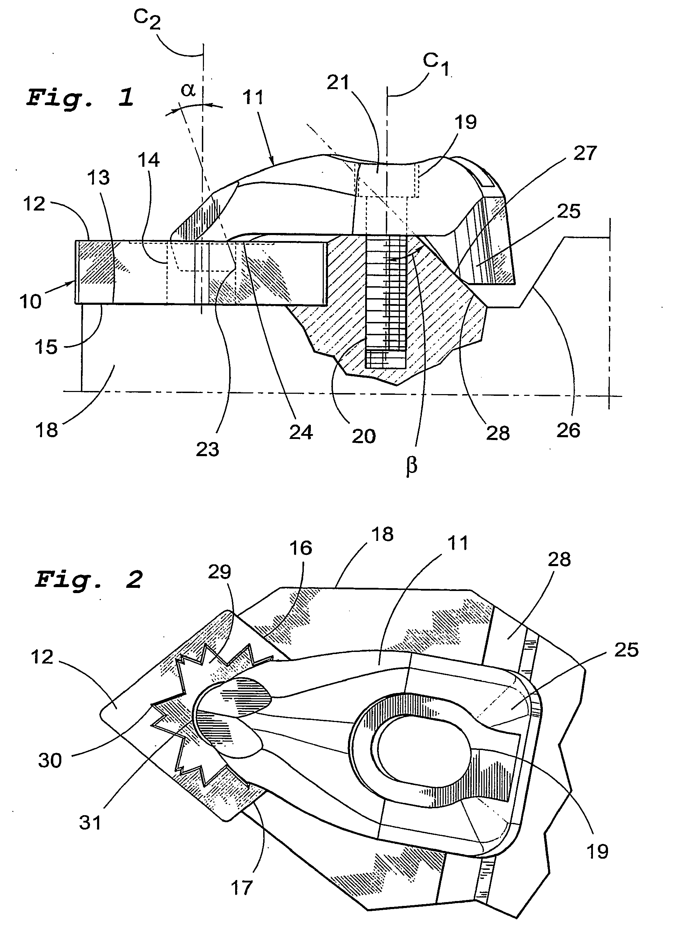

The indexable insert 10 shown in figs. 1-2 is shown in co-operation with a holder clamp 11. The indexable insert has in this shown embodiment a rhombic basic shape and cutting tip angles below 80°. The flat surfaces 12 and 13 of the indexable insert, which are mutually parallel, form a right angle to the edge surfaces uniting them. The indexable insert 11 has a central through hole 14, the centre axis of which is oriented perpendicularly to the flat surfaces 12 and 13 of the cutting insert. The seating, in which the indexable insert 10 is received, comprises the bottom support surface 15 and two side support surface 16 and 17 raised perpendicularly from the same. The bottom support surface 15 may either be a part surface of an insert holder 18, as in the shown embodiment, or consist of a separate shim plate in the cutting insert seating, which is clamped by means of a suitable fastening means (not shown).

So as to enable clamping of the indexable insert 10 in the cutting insert seating in the insert holder, a clamp 11 is as mentioned arranged, which is manoeuvrable by means of a tightening screw 21 threaded-in into an elongate recess 19 in the clamp going in a threaded boring 20 in the insert holder 18, the centre axis C₁ of which is oriented parallel to the centre axis C₂ for the insert hole 14. The front end of the clamp 11 consists of an obliquely downward-inward directed first projection 22 oriented at an oblique angle α in relation to the centre axis C₂ of the hole 14 arranged to be brought to engagement with the hole wall in the insert hole 14 directed inwards towards the holder at a contact point 23 a distance down in the insert hole. Simultaneously, a part of the bottom side of the clamp 11 goes in engagement with the top side 12 of the cutting insert at a contact surface 24 at a portion near the centre hole 14 of the cutting insert. The opposite end of the clamp 11 consists of a second projection 25, which is received in a recess 26 in the insert holder 18, the end surface 27 of the projection 25 being convexly formed and arranged to upon the clamping be brought to surface contact with a corresponding planar stop face 28 formed in an oblique angle to the centre axis C₁ of the tightening screw 21 in said recess 26. Alternatively, the end surface 27 may be flatly formed for contact with the planar stop face 28. The size of the angle α should be substantially the same or somewhat less than the acute angle of inclination β, with which the rear contact surface 28 in the holder is oriented.

According to the invention, the upper surface portion of the cutting insert around the central insert hole 14 has been formed as a planar surface 29 having a star-shaped basic shape, wherein said star shape should be radially outwardly limited by at least 6 points, the intention being that said planar surface 29 preferably should be formed as a surface elevated in relation to the top surface 12. Alternatively, however, the surface 29 may in certain cases be a surface countersunk in relation to the top surface 12. The various points 30 may either be acute as is shown in fig. 2 or be smoothly rounded. The radially inner limiting line 31 of the planar surface 29 should be circular and connect to the centre hole 14 and therefore have the same radius as the centre hole.

The embodiment described above and shown in the drawings is, as mentioned, radially outwardly limited by at least 6 pieces of point portions 30.

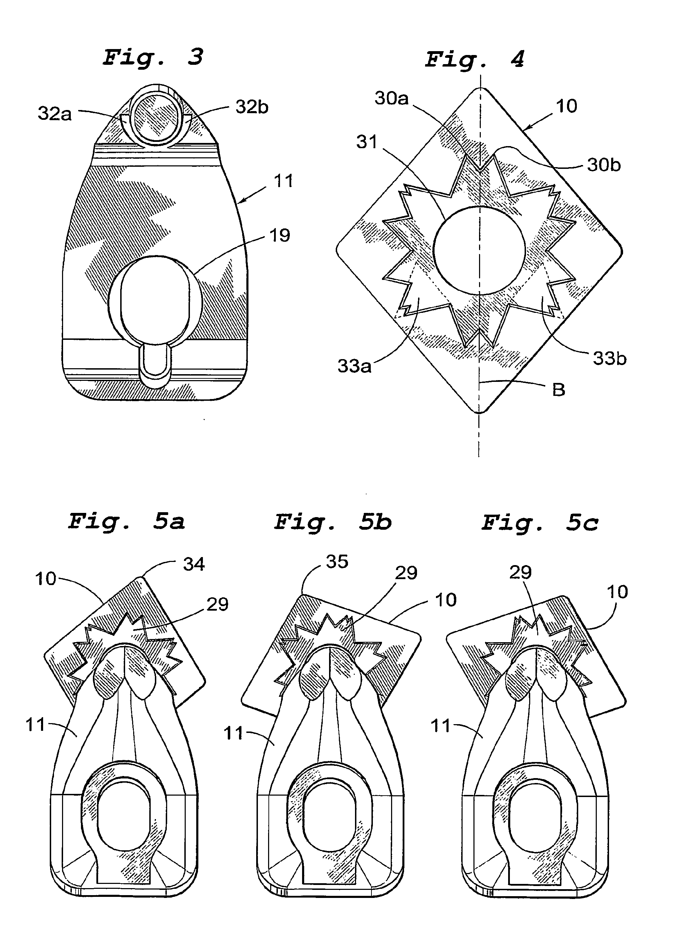

The radially outer end termination of each point portion 30 comprises in the embodiment shown in fig. 2 two tip portions 30a and 30b. At polygonally formed cutting inserts, said part portions 30a and 30b should be symmetrically formed on both sides of the bisector B in at least two of the diametrically counter-positioned corner portions of the cutting insert as is shown in fig. 4. The bisector B for the same point portions in said two counter-positioned corners should in that connection pass through the centre of the insert hole 14.

Said planar substantially star-shaped surface 29 is intended to be contact surface for the part of the bottom surface of the clamp that is situated in near connection to the central insert hole 14. Closer given is the intention that the lower part of the clamp in the same section should have pairwise-arranged sp aced-apart part surfaces 32a and 32b, which may be arc-shaped having a tapering width, or substantially triangular in order to go in surface contact with the correspondingly formed planar surface portions of the surface 29.

In a triangular embodiment, the shape thereof may be as is closer shown at 33a and 33b of the star-shaped surface 29 in fig. 4.

In figs. 5a, 5b and 5c is shown how the proposed indexable insert according to the invention can enable exposure of the acute-angled cutting corner, designated 34 in fig. 5a, as well as the obtuse-angled cutting corner, designated 35, for chip forming machining with one and the same type of clamp.

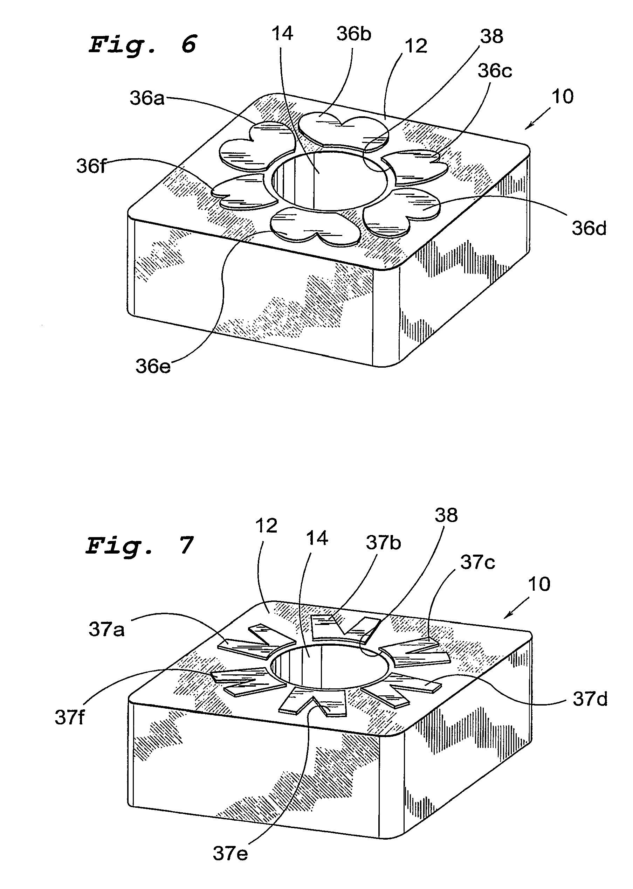

In fig. 6 an alternative insert shape is shown, with the star-shaped surface 29 being composed of a number of spaced-apart heart-shaped surfaces 36a, 36b, 36c, 36d, 36e and 36f. Said surfaces are plane-parallel with the surrounding flat surface 12 as well as elevated a distance in relation to the same. The inner limiting surface of each such surface is furthermore circularly curved substantially in counterpart to the curvature of the central hole 14. Each such heart-shaped surface is finished radially inwards a small distance at a distance from the opening to the hole 14.

In fig. 7 another alternative insert shape is shown, with the surface configuration elevated around the insert hole 14 being in the form of a number of surface segments 37a-f spaced-apart from each other in circumferential directions which each one is v-shaped. The inner limiting surface of each such surface is, as in fig. 6, circularly curved substantially in counterpart to the curvature of the central hole 14. Each such surface segment is, furthermore, terminated a small distance from the opening of the hole 14.

## Claims

1. Cutting insert for cutting tools of the type that comprises a holder having a seating intended for receipt of the cutting insert (10), the shape of which seating partially corresponds to the shape of the cutting insert, and a clamp (11) connected with the holder via a screw (21) and with the purpose of clamping the cutting insert into the seating, the clamp (11) having a nose (4) arranged to engage a hole (14) mouthing in one of two opposite top and bottom sides (12,13) on the cutting insert in order to upon tightening of the screw pull in the cutting insert into the seating and directly press at least one side surface on the cutting insert against a corresponding side surface (16, 17) in the seating, at the same time as the clamp having one or more lower part surfaces arranged to, upon the tightening of the tightening screw, be brought to surface contact with the surface portion of the cutting insert located between the insert hole (14) and the side support surface (16, 17), **characterized in that** the surface (29) of the cutting insert located around the hole (14) is planar and has a star-shaped basic shape, said star shape having at least 6 points, the lower part surfaces of the clamp being arranged pairwisely to, upon the tightening of the tightening screw (21), be brought to planar surface abutment against pairwise-arranged point portions of said star-shaped surface (29).

2. Cutting insert according to claim 1, **characterized in that** the surface of the cutting insert located around the hole is plane-parallel with the bottom surface of the cutting insert.

3. Cutting insert according to claim 1 or 2, **characterized in that** the star-shapedly arranged surface (29) around the hole (14) is formed as a countersink in the upper flat surface (12) of the cutting insert.

4. Cutting insert according to claim 1 or 2 **characterized in that** the star-shapedly arranged surface (29) around the hole (14) is formed as an elevated plateau in relation to the other part of the upper flat surface of the cutting insert.

5. Cutting insert according to any one of claims 1-4, **characterized in that** the points (30) are arranged pairwisely in each corner region of the cutting insert, the pairwise-arranged portions (30a, 30b) being symmetrically located on both sides of the bisector (B) at at least two diametrically counter-positioned corner portions.

6. Cutting insert according to any one of claims 1-5, **characterized in that** the radially inner limiting line (31) of the planar surface (29) is circular, connecting to the centre hole (14) with the same radius as the centre hole (14).

7. Cutting insert according to any one of claims 1-6, **characterized in that** the point portions (30) of the star-shaped surface around the hole (14) has smoothly rounded outer end terminations.

8. Cutting insert according to claim 5, **characterized in that** the bisector (B) passes through the centre of the insert hole (14).

9. Cutting insert according to any one of claims 1-8 **characterized in that** the cutting insert is polygonal having cutting tip angles below 80°.

## Patentansprüche

1. Schneideinsatz für Schneidwerkzeuge vom Typ, der ein Halteteil umfasst, welches einen Sitz zur Aufnahme des Schneideinsatzes (10), dessen Form im Wesentlichen der Form des Schneideinsatzes entspricht, und eine Klemme (11) aufweist, die mit dem Halteteil mittels einer Schraube (21) verbunden ist und den Zweck hat, den Schneideinsatz in den Sitz zu klemmen, wobei die Klemme (11) eine Nase (4) aufweist, die dafür ausgelegt ist, mit einem Loch (14), das sich zu einer der zwei gegenüberliegenden Ober- und Unterseiten (12, 13) auf dem Schneideinsatz öffnet, in Eingriff zu treten, so dass durch das Festziehen der Schraube der Schneideinsatz in den Sitz gezogen und wenigstens eine Seite der Fläche des Schneideinsatzes gegen eine entsprechende Seitenfläche (16, 17) in dem Sitz gepresst wird während gleichzeitig die Klemme eine oder mehrere untere Teilflächen hat, die dafür ausgelegt sind, beim Festziehen der Schraube in Flächenkontakt mit dem Flächenabschnitt des Schneideinsatzes gebracht wird, der zwischen dem Einsatzloch (14) und der Seitenauflagefläche (16, 17) liegt, **dadurch gekennzeichnet, dass** die Fläche (29) des Schneideinsatzes um das Loch herum (14) planar ist und eine sternförmige Grundform aufweist, wobei die sternförmige Form wenigstens 6 Spitzen aufweist, die Flächen des Unterteils der Klemme paarweise angeordnet sind, so dass sie, wenn die Schraube (21) festgezogen wird, mit den paarweise angeordneten Spitzenbereichen der sternförmigen Fläche (29) in ebene Anlage kommen.

2. Schneideinsatz gemäß Anspruch 1, **dadurch gekennzeichnet, dass** die Fläche des Schneideinsatzes um das Loch herum planparallel zu der Unterseite des Schneideinsatzes ist.

3. Schneideinsatz gemäß Anspruch 1 oder 2, **dadurch gekennzeichnet, dass** die um das Loch (14) herum sternförmig angeordnete Fläche (29) als Senkung in der oberen flachen Fläche (12) des Schneideinsatzes ausgebildet ist.

4. Schneideinsatz gemäß Anspruch 1 oder 2, **dadurch gekennzeichnet, dass** die um das Loch (14) herum sternförmig angeordnete Fläche (29) im Vergleich zu dem anderen Teil der oberen flachen Fläche des Schneideinsatzes als erhöhte Fläche ausgebildet ist.

5. Schneideinsatz gemäß einem der Ansprüche 1-4, **dadurch gekennzeichnet, dass** die Spitzen (30) in jedem Eckbereich des Schneideinsatzes paarweise angeordnet sind, wobei die paarweise angeordneten Bereiche (30a, 30b) symmetrisch auf beiden Seiten der Halbierungslinie (B) in mindestens zwei diametral gegenüberliegenden Eckbereichen liegen.

6. Schneideinsatz gemäß einem der Ansprüche 1-5, **dadurch gekennzeichnet, dass** die radial innere Grenzlinie (31) der planaren Fläche (29) kreisförmig ist und mit demselben Radius wie das zentrale Loch (14) an dieses anschließt.

7. Schneideinsatz gemäß einem der Ansprüche 1-6, **dadurch gekennzeichnet, dass** die Punktbereiche (30) der um das Loch (14) herum sternförmigen Fläche sanft gerundete Abschlüsse am äußeren Ende aufweisen.

8. Schneideinsatz gemäß Anspruch 5, **dadurch gekennzeichnet, dass** die Winkelhalbierende (B) durch das Zentrum des Einsatzlochs (14) hindurch geht.

9. Schneideinsatz gemäß einem der Ansprüche 1-8, **dadurch gekennzeichnet, dass** der Schneideinsatz polygonal ist und die Winkel der Schneidspitze unter 80 ° betragen.

## Revendications

1. Insert de découpe pour des outils de découpe du type qui comprend un support ayant un logement destiné à recevoir l'insert (10) de découpe, la forme dudit logement correspondant partiellement à la forme de l'outil de découpe, et un collier (11) relié au support via une vis (21) et dans le but de fixer l'insert de découpe dans le logement, le collier (11) ayant un nez (4) disposé pour venir en prise avec un trou (14) s'ouvrant sur l'un des deux côtés supérieur et inférieur (12, 13) opposés de l'insert de découpe afin, lors du serrage de la vis, de rentrer l'insert de découpe dans le logement et d'appuyer directement sur au moins une surface latérale de l'insert de découpe contre une surface latérale correspondante (16, 17) dans le logement, en même temps que le collier ayant une ou plusieurs surfaces de partie inférieure disposées pour, lors du serrage de la vis de serrage, être mis en contact superficiel avec la partie de surface de l'insert de découpe située entre le trou (14) d'insert et la surface (16, 17) de soutien latérale, **caractérisé en ce que** la surface (29) de l'insert de découpe située autour du trou (14) est plane et possède une forme de base en forme d'étoile, ladite forme d'étoile ayant au moins 6 points, les surfaces de partie inférieure du collier étant disposées deux par deux pour, lors du serrage de la vis (21) de serrage, venir en butée de surface plane contre des parties de points disposées deux par deux de ladite surface (29) en forme d'étoile.

2. Insert de découpe selon la revendication 1, **caractérisé en ce que** la surface de l'insert de découpe située autour du trou est plane-parallèle à la surface inférieure de l'insert de découpe.

3. Insert de découpe selon la revendication 1 ou 2, **caractérisé en ce que** la surface (29) disposée en forme d'étoile autour du trou (14) est formée comme une fraisure dans la surface plate supérieure (12) de l'insert de découpe.

4. Insert de découpe selon la revendication 1 ou 2, **caractérisé en ce que** la surface (29) disposée en forme d'étoile autour du trou (14) est formée comme un palier élevé par rapport à l'autre partie de la surface plate supérieure de l'insert de découpe.

5. Insert de découpe selon l'une des revendications 1 à 4, **caractérisé en ce que** les points (30) sont disposés deux par deux dans chaque région de coin de l'insert de découpe, les parties (30a, 30b) disposées deux par deux étant situées de manière symétrique des deux côtés de la bissectrice (B) à au moins deux parties de coin en position diamétralement inverse.

6. Insert de découpe selon l'une des revendications 1 à 5, **caractérisé en ce que** la ligne (31) de limitation radialement intérieure de la surface place (29) est circulaire et reliée au trou central (14) avec le même rayon que le trou central (14).

7. Insert de découpe selon l'une des revendications 1 à 6, **caractérisé en ce que** les parties (30) de point de la surface en forme d'étoile autour du trou (14) possèdent des extrémités extérieures légèrement arrondies.

8. Insert de découpe selon la revendication 5, **caractérisé en ce que** la bissectrice (B) passe à travers le centre du trou (14) d'insert.

9. Insert de découpe selon l'une des revendications 1 à 8, **caractérisé en ce que** l'insert de découpe est polygonal et possède des angles de tête de découpe inférieurs à 80°.
